# EUROPEAN PATENT APPLICATION

(11) **EP 1 711 013 A1**
(43) Date of publication of application: **11.10.2006**
(21) Application number: 06075706.9
(22) Date of filing: 27.03.2006
(51) Int. Cl.: H04N 7/173

(54) **Data scheduling**

(30) Priority: 08.04.2005 GB 0507124
(71) Applicant: Quadriga Technology Limited, London W4 4AL (GB)
(72) Inventor: Narayanan, Anantha sivaraman, Camberley, Surrey GU15 2SS (GB); Macro, Ian Kenneth, Reading, Berkshire RG4 7BU (GB)
(74) Representative: Hyden, Martin Douglas

(57) **Abstract**

A method of scheduling a series of data files, preferably digital movie files provided in encrypted form for transmission to hotels, for transmission by a predetermined transmission channel in a predetermined time period according to one aspect of the invention comprises:
determining the bandwidth of the transmission channel;
determining the size of each data file in the series;
determining the schedule of a corresponding series of data files transmitted over the same transmission channel in a previous predetermined period of time;
determining data files from the corresponding series that are not available for transmission in this predetermined period of time;
determining data files that have become available for transmission since the previous predetermined period of time;
determining other parameters dependent on the success or failure of transmission or reception of each data file in the series:
assigning a ranking value to each data file according to the determined parameters; and
scheduling the transmission of each data file in the series according to its ranking value.

## Description

### Technical field

This invention relates to systems for scheduling data transmission between two points via a communication channel of finite size. The invention is particularly aimed at scheduling delivery of audio/visual (AV) data, typically in the form of movies delivered from a central source to local servers via a satellite link. However, the system can also be used effectively for other types of data transmission.

### Background art

Systems already exist that distribute copies of movies to servers via satellite. One such example is the provision of movies to hotels for use in video-on-demand (VOD) systems. Examples of these can be found in WO 02065771 A , WO 02065705 A , WO 02065778 A, and WO 02084971 A.

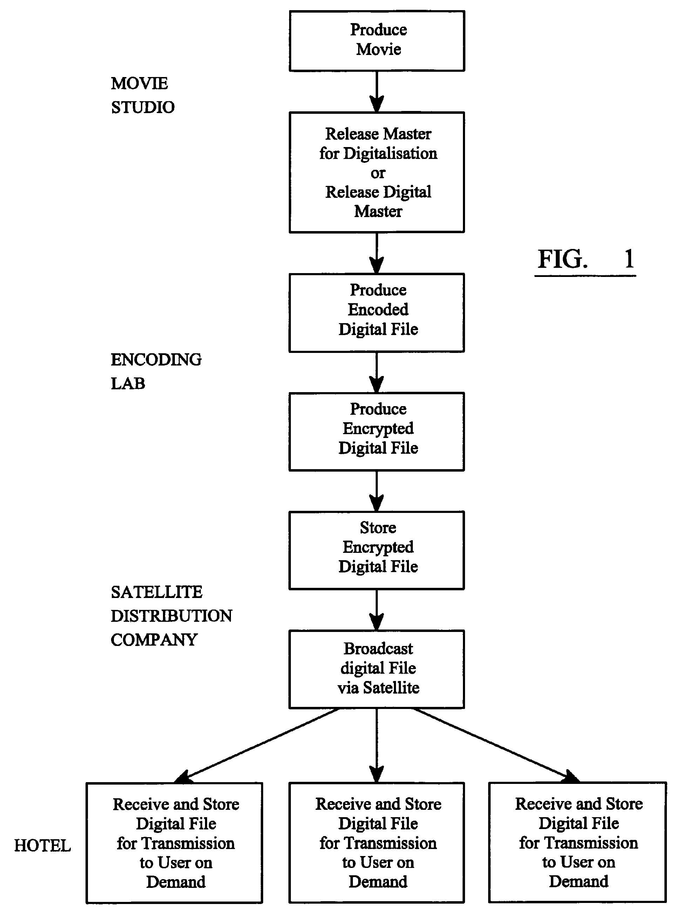

The flow chart in Figure 1 summarises the process. The content owner, typically the movie studio, produces a movie and then releases either a master tape or magnetic analogue recording tape for digitisation, or a high quality digital file such as a DVD copy. These masters are then encoded as a digital file at the desired resolution (typically 4Mbps or 3 Mbps, depending on the replay quality desired, 2Mbps is also used) and encrypted. This is typically undertaken by an encoding lab. The encoded and encrypted files are then stored digitally for later transmission by a satellite distributor. The satellite distributor then broadcasts the encrypted files either singly or as a sequence in the order requested by its customer. The broadcasts are detected by the recipients, the hotels, who have the correct codes to decrypt the encrypted files and store them on a local server in a form that can be transmitted to rooms on demand of the user.

The use of satellite transmission can be very effective to transmit files to a number of locations that are separated geographically, especially where telecommunications services cannot reliably support other forms of transmission (internet, dial-up, etc.). However, movies in digital form are relatively large files. Depending on the quality of encoding and the length of the movie, the files can vary in size, typically between 3Gb and 6Gb. Satellite transmission typically takes place at 2Mbps which means that a 3Gb movie takes around four hours to transmit. The finite capacity of this transmission channel means that there is ultimately a limit on the number of files/movies that can be transmitted in any given period.

The hotel VOD market usually requires that the movies held on a local server be refreshed periodically. While not all the movies on a given server are refreshed at the same time, it is common that several may be refreshed in any given period. Not all hotels will have exactly the same movies. Some may take the same movie in different language or subtitle versions. Different hotels may require different numbers of different types of movies. Consequently, where there are a large number of hotels to be serviced, the number of movies to be provided in a given period can be high.

The period in which refresh takes place is typically one month although other periods can be used according to requirements. In order to be ready to start a month with a stable offering, it is necessary that any refresh is completed before the end of the preceding month. Given the typical transmission rate of 2Mbps mentioned above, and the average movie file size discussed above, the maximum number of movies that can be broadcast by the satellite distribution system in any given month is about 180. However, this leaves no room in the distribution channel for non-movie data (software upgrades, etc.), or retransmission of any movie if it has not been properly transmitted or received at any point. Therefore, there is a practical limit of 120-160 movies that can be transmitted in a month.

Even allowing for the overhead and retransmission problems, it is still often the case that it is not possible to ensure that all of the movies to be transmitted in a month are properly transmitted and received. The consequence of this failure can be financial since it may cause the supplier to fail to meet contractual obligations and may mean that the hotel is not able to offer movies that its customers wish to purchase for viewing. It is therefore desirable to ensure that those movies that have the most significance are transmitted earlier in the sequence than less significant ones (since it is these that are likely to be missed in the event of transmission or reception problems). Management of scheduling is important to make the best use of the communication channel limitations. This has been achieved by ranking movies by significance to allow those movies that have the biggest impact on the supplier to be addressed first.

To date, this process of ranking the significance of movies has been essentially manual, relying on spreadsheets having the various rules applicable coded in formulae to assign values to the movies. Despite the automation of part of the process, the ranking is ultimately assigned manually and the movies ordered for transmission according to this ranking.

### Disclosure of the invention

This invention provides for the ranking of a series of files such as movies according to the various factors that affect the manner in which their transmission may be scheduled to give the best possibility of achieving the desired result.

A method of scheduling a series of data files for transmission by a predetermined transmission channel in a predetermined time period according to one aspect of the invention comprises:
- determining the bandwidth of the transmission channel;
- determining the size of each data file in the series;
- determining the schedule of a corresponding series of data files transmitted over the same transmission channel in a previous predetermined period of time;
- determining data files from the corresponding series that are not available for transmission in this predetermined period of time;
- determining data files that have become available for transmission since the previous predetermined period of time;
- determining other parameters dependent on the success or failure of transmission or reception of each data file in the series:

- assigning a ranking value to each data file according to the determined parameters; and
- scheduling the transmission of each data file in the series according to its ranking value.

The data files are preferably digital movie files provided in encrypted form for transmission to hotels.

The transmission channel is preferably a satellite transmission channel.

The data files are typically provided by a supplier and received by a customer (such as a hotel), the other parameters comprising user-defined parameters defined by the supplier and/or customer according to a predetermined arrangement, such as a contract or other commercial agreement.

The provision of data files according to the invention involves transmitting the data files according to the schedule.

Transmission is typically a broadcast transmission by a satellite link of predetermined bandwidth. Data files received by a recipient may be stored locally for local distribution to users.

The transmission may also involve attaching codes to the data files such that only recipients with the appropriate key can receive and store the coded file.

### Brief description of the drawings

Figure 1 shows a flow diagram of the distribution of movies to hotels via a satellite distribution channel;
Figure 2 shows a schematic diagram of a distribution system to which the present invention relates; and
Figure 3 shows a summary of a rule process for use in the method.

### Mode(s) for carrying out the invention

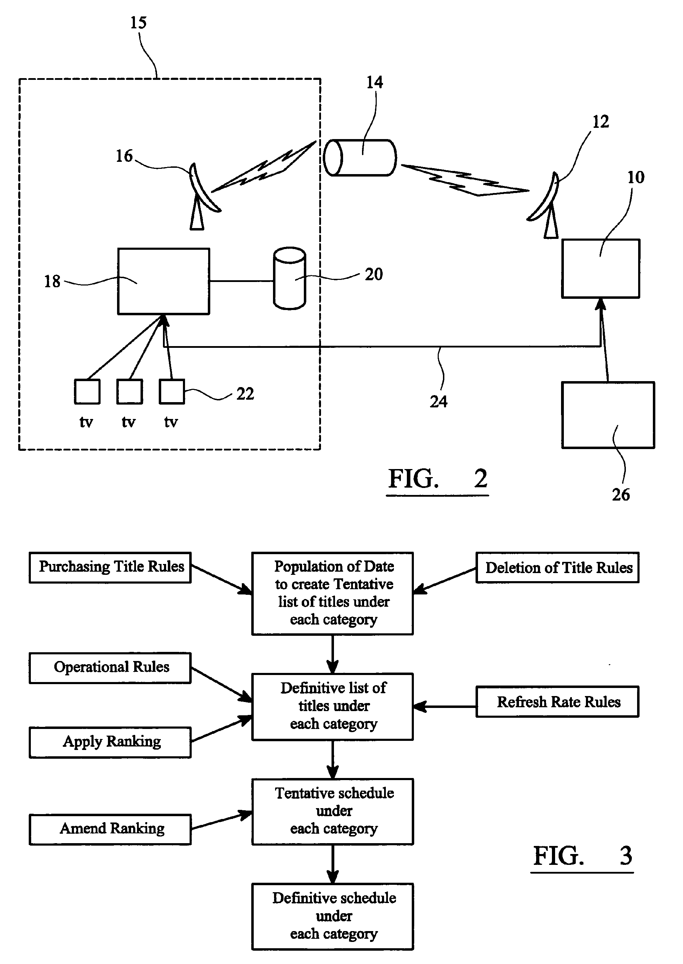

This invention will now be described in the context of the distribution of movies to hotels in various countries for use in VOD systems installed in the hotels as shown in Figure 2. The context of this invention is that the supply of movies to the hotels is the responsibility of a supply company which is engaged to provide the hotels with movies according to certain agreed contractual terms. A transmission hub10 is connected to a satellite transmission system 12 including a satellite 14. Data is transmitted in encoded form to the satellite 14 from where it is broadcast. Hotels 15 are located in a number of countries within the transmission footprint of the satellite. Each hotel 15 has a satellite receiver 16 and decoder connected to a head end server 18 that includes a database 20 for storing the movie files. The head end server is provided with a back channel 24 (typically a dial up connection or ADSL) to the hub 10. The rooms 22 in the hotel 15 are equipped with a local control unit LCU and a television TV. The occupant of the room requests a movie to be transmitted to the TV from the head end server via the LCU. In use, each hotel is provided with a set of encryption keys corresponding to the specific movies it is to receive. The satellite 14 broadcasts all of the movies but only those for which keys have been obtained are downloaded and stored in the database 20.

Scheduling according to the invention is best performed using a software application on a computer system including a database. The object of the scheduling is to generate a schedule showing titles in each of the countries to which content must be provided. This process is conducted on a computer 26 connected to the hub 10 and provides the satellite transmission system 12 with the order in which movies are transmitted.

Once the bandwidth of the satellite channel, typically 2Mbps, has been determined, and the duration of the transmission period determined, typically one month, the total capacity of the channel can be calculated. This determines what is possible if all proceeds as desired. The scheduler application provides a playlist that can be applied to this channel to help mitigate any problems arising from its limited size.

The scheduler application generates a list of titles in predetermined categories for each country in different languages.

The schedule generation process involves the population of data to create a list of titles available for transmission for each category. The categories of movie are typically dependent on the movie subject or type, for example: Hollywood Greats, Blockbusters, Children's Movies, etc. The inputs at this stage are obtained from the movie supplier (studio) list, internet sites, box office success statistics and an overall mix of titles. Availability of titles from suppliers is determined by license terms. Such terms may include a limited period in which the movie may be supplied. Once this period has expired, the movie may not be offered even if the supplier is still in possession of the digital file.

For each category, depending upon the release date of the titles in the country of interest, ranking is given based on review from internet sites. The scheduler application applies formulae to generate a play list (schedule) depending on the minimum number of movies in a given category for that country. The summary of rule application is shown in Figure 3.

The basic steps are as follow:
- Select country for which schedule is to be generated
   The population of hotels to be supplied is divided by country. Each country has its own specific requirements of language, etc.
- Apply business rules
   The business rules are determined by contractual arrangements with the hotels in that country. These can include, for example:
   - Total target
   - Language spread for country
   - Language spread by category
- Select category of movie
- Get list of all titles in that category
- Get minimum threshold for each language in that category
- Rank movies in list
   This ranking can be based on internet movie reports and business rules.
- Generate scheduler and apply to hub 10.

Inputs to the schedule content analyser application include:
- List of titles purchased from suppliers (studios)
- List of titles available for screening in a particular country
- Status of assets for scheduler

There are a number of business rules that can be applied to generate the schedule. These can include, for example:
- Operational Rules
   - Country vs. language spread
      The number of movies in a particular language required in that country.
   - Country vs. target
      The number of movies of a particular category required in that country.
- Deletion of Titles
   Certain titles are deleted depending on a number of criteria that can include, for example:
   - Licensing
      Where a license has not been renewed, or is withdrawn from release by the supplier.
   - Performance of movie in box office
      If a current movie falls in box office ratings, it may be deleted from the list.
   - Age of file
      After a certain amount of time, movies may be deleted as out of date even if the license is still valid.
- Purchasing of Titles
   Certain rules can be applied when deciding to purchase new titles, such as:
   - Minimum threshold matrix (minimum requirement from each country)
   - Movie detail (review from internet sites)
   - Availability of licenses for countries and language from suppliers
- Refresh Rate
   The decision to provide new movies can be based on:
   - Performance of movie in box office (review from internet sites)
   - License expiry
   - Availability of files
   - Age of file
- Ranking
   The ranking of the movies is used to generate the schedule, based on:
   - Top down approach
   - Inputs from review of titles
   - Availability of titles in languages based on licenses

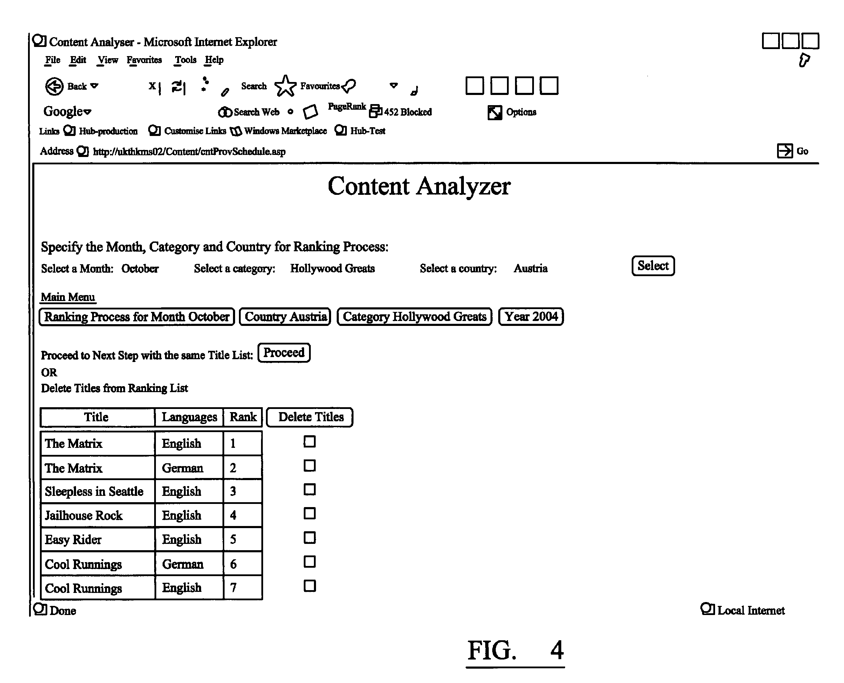

The scheduler application applies the process described above by starting with the previous month's schedule list and making modifications. A series user interfaces (Figures 4-8) display the necessary information for an operator to make the necessary modifications.

The first step applied to this list is the deletion logic based on licensing performance and age. The process is to select the listing for the country and category of interest and delete the titles identified by the rules from that list. A new ranking list is then generated (Figure 4).

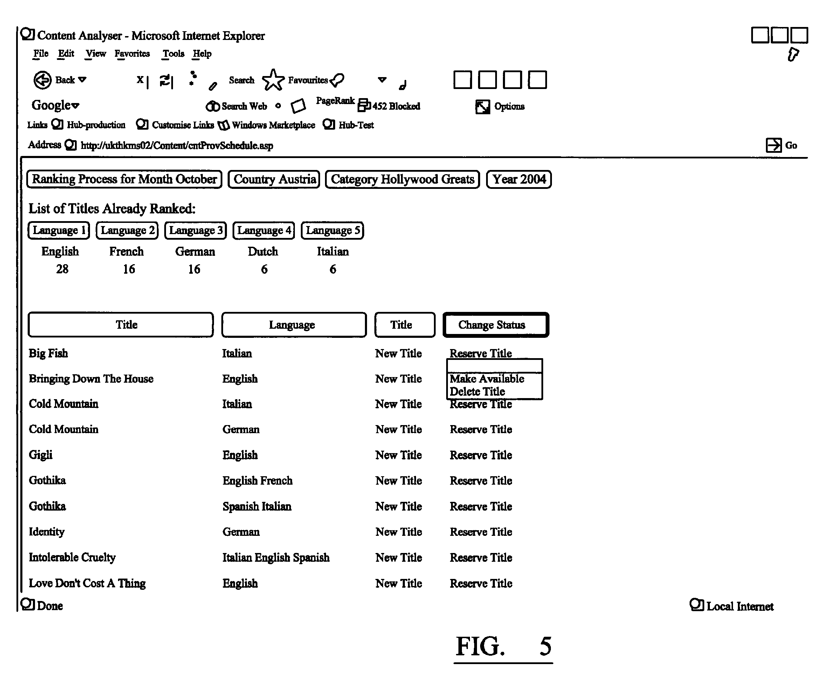

The second step is to apply the refresh rate logic based on license expiry, availability of title and age of title. The interface displays complete information of the ranking process for a given month, country, category and year. A complete count of titles in each language already ranked from the previous month's list is displayed together with an indication of the number of new titles needed to reach the agreed minimum. In the process of ranking, each title is given a status flag selected from "Reserve Title", "Make Available", and "Delete Title". A new title always starts with a default status of "Reserve Title". To make the title available for ranking, the status is changed to "Make Available". Alternatively, to remove a title from the list, the status flag is changed to "Delete Title". (Figure 5)

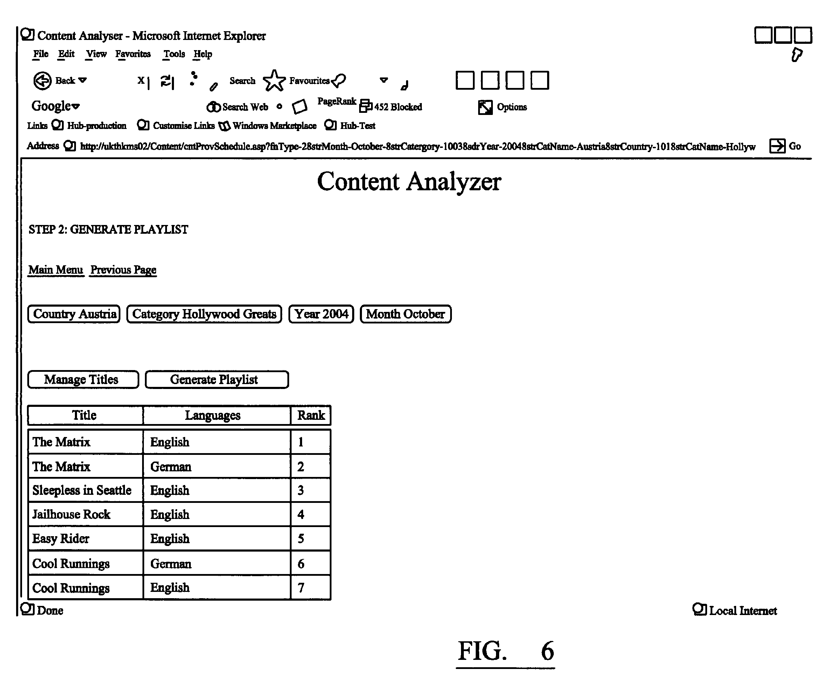

The next step is to generate a playlist based on the ranking logic of: top down approach (new released titles are top in list), inputs from reviews of titles and availability of titles in languages based on licenses. Ranking of the titles is done by assigning a number of from 1 up to the total number of titles. Manual modification of this ranking is possible and a playlist is generated based on this ranking. (Figure 6)

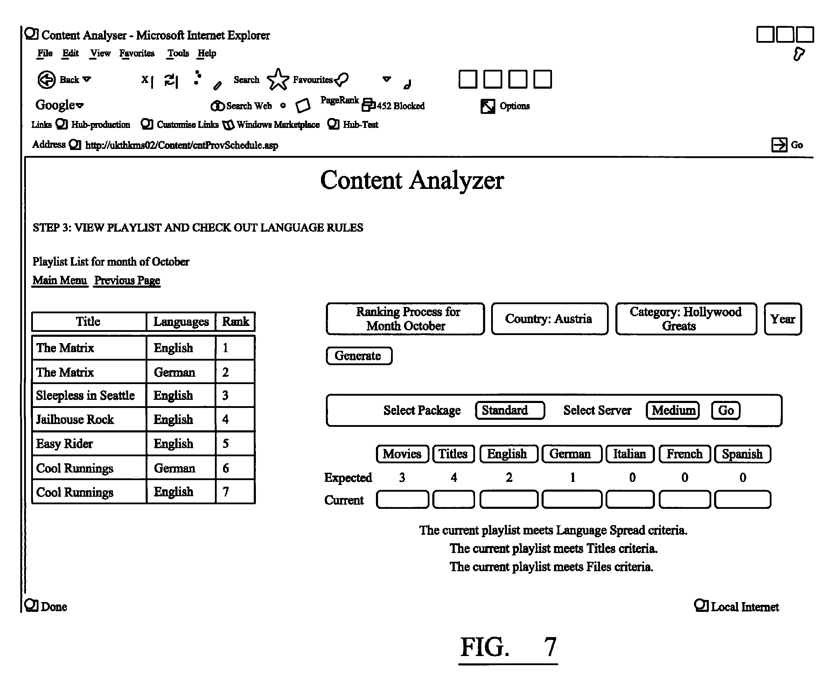

In the next step, the generated playlist is checked against the business rules based on the logic of country vs. language spread and country vs. target discussed above. Based on the ranking and playlist generated previously, the application determines if the business rules have been met. While general rules are discussed above, specific rules are applied for different product packages and hotel server sizes in each country. Based on the selected titles and ranking, the application identifies whether or not language and title criteria have been met. If not, or even if they have, a user can return to the previous step and re-run the ranking process to address the business rule needs. (Figure 7)

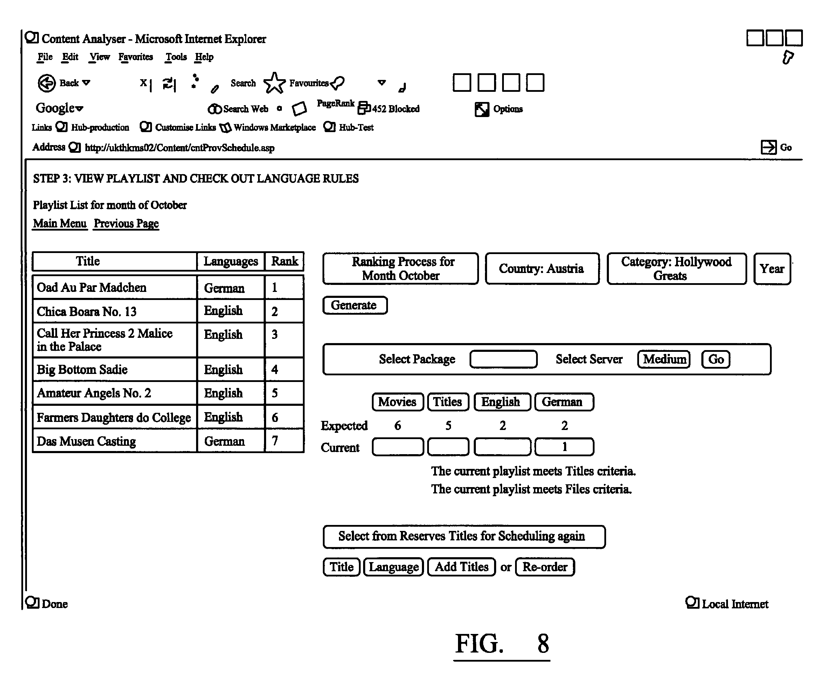

Once the ranking process is complete, a final playlist can be generated. (Figure 8)

This final playlist is provided to the transmission system and the movies transmitted in the order of the playlist. Thus, the highest raked movies, those with the highest significance, are transmitted first, so as to ensure that they are delivered to the hotels as required. By this approach, any movie missed in a transmission period, typically one month, is lower ranked and therefore unlikely to have such an impact on the supplier or hotel.

The problem addressed by this invention is to manage the use of the restricted bandwidth communication channel to optimise performance against predetermined objectives. By managing the resource effectively, the negative impact of failure to transmit or receive properly can be mitigated. In the case where a high ranking movie fails to be received for some reason, it can be retransmitted within the same period. The effect will be that one of the lower ranking movies might not be transmitted during that period, but its impact will be significantly less that if the higher ranking movie was not delivered.

It will be appreciated that this methodology can be applied to other cases of files being delivered in a limited bandwidth communication channel.

## Claims

1. A method of scheduling a series of data files for transmission by a predetermined transmission channel in a predetermined time period, the method comprising:
- determining the bandwidth of the transmission channel;
- determining the size of each data file in the series;
- determining the schedule of a corresponding series of data files transmitted over the same transmission channel in a previous predetermined period of time;
- determining data files from the corresponding series that are not available for transmission in this predetermined period of time;
- determining data files that have become available for transmission since the previous predetermined period of time;
- determining other parameters dependent on the success or failure of transmission or reception of each data file in the series:
- assigning a ranking value to each data file according to the determined parameters; and
- scheduling the transmission of each data file in the series according to its ranking value.

2. A method as claimed in claim 1, wherein the data files are digital movie files.

3. A method as claimed in claim 1 or 2, wherein the transmission channel is a satellite transmission channel.

4. A method as claimed in claim 1, 2 or 3, wherein the data files are provided by a supplier and received by a customer, the other parameters comprise user-defined parameters defined by the supplier and/or customer according to a predetermined arrangement.

5. A method of transmitting data files via a transmission channel, comprising scheduling transmission of the data files by a method as claimed in any preceding claim, delivering the scheduled data files to a transmission system, and transmitting the files in the order determined by the schedule.
